# EUROPEAN PATENT SPECIFICATION

(11) **EP 3 185 384 B1**
(45) Date of publication and mention of the grant of the patent: **30.11.2022**
(21) Application number: 15841278.3
(22) Date of filing: 27.05.2015
(51) Int. Cl.: H02H 9/02, H02H 9/04, H02H 9/06

(54) **PROTECTION APPARATUS, ELECTRONIC DEVICE AND POWER SUPPLY**
SCHUTZVORRICHTUNG, ELEKTRONISCHE VORRICHTUNG UND STROMVERSORGUNG
APPAREIL DE PROTECTION, DISPOSITIF ÉLECTRONIQUE ET ALIMENTATION ÉLECTRIQUE

(30) Priority: 19.09.2014 CN 201410482156
(43) Date of publication of application: 28.06.2017
(73) Proprietor: HUAWEI TECHNOLOGIES CO., LTD., Shenzhen Guangdong 518129 (CN)
(72) Inventor: WANG, Qinghai, Shenzhen Guangdong 518129 (CN); DING, Yu, Shenzhen Guangdong 518129 (CN); HUANG, Yintao, Shenzhen Guangdong 518129 (CN)
(74) Representative: Pfenning, Meinig & Partner mbB
(86) International application number: PCT/CN2015/079954
(87) International publication number: WO 2016/041377

(56) References cited:
- EP-A1- 0 360 933
- CN-A- 103 795 045
- CN-A- 103 956 387
- CN-A- 104 269 835
- CN-U- 203 481 808
- DD-A7- 288 739
- US-A- 4 912 589

## Description

### TECHNICAL FIELD

The present invention relates to the communications field, and in particular, to a protection apparatus, an electronic device, and a power supply.

### BACKGROUND

A power supply of a communications device is frequently interfered with by an overvoltage. The overvoltage includes an overvoltage generated because of a direct lightning strike or an induction lightning strike, and an overvoltage in a power supply system such as an industrial frequency overvoltage or a switching overvoltage. The overvoltage may threaten human and device security, and affect reliable running of a device. Therefore, a prevention measure needs to be taken to reduce the overvoltage to an allowable level.

Generally, for low-level differential mode protection of a communications power supply port, a single-stage protection circuit may be used, and one or more metal oxide varistors (Metal Oxide Varistor, MOV) that are connected in parallel are connected between power supply ports to discharge a lightning current. For high-level differential mode protection, a multi-stage protection circuit is used to gradually discharge a lightning current.

The solution has the following disadvantage: Because there is an electrolytic capacitor in a power supply circuit, a lightning protection capability of the circuit has a relatively big difference when a direct current power supply port encounters lightning strikes in different polarities. When the lightning current flows from a negative electrode of the power supply to a positive electrode, a next-stage protection circuit is affected much more seriously. It is mainly embodied as follows: a next-stage circuit or device may be more easily damaged when a current surging into the next-stage circuit is relatively high because of a relatively high residual voltage at two ends of the protection circuit.

US4912589A discloses a triggered surge suppression network comprising a low voltage clamping device, a crowbar device and a trigger device. The voltage clamping device and the trigger device are connected in parallel; and these devices are connected in series to the crowbar device. The resulting circuit is connected across a voltage supply, in parallel to a load. The trigger device causes the crowbar device to break down at a pre-set value and discharge the energy of the surge through the low voltage clamping device. The breakdown voltage of the network will depend essentially on the breakdown voltage of the crowbar device while the peak voltage supplied to the load during the surge will independently be determined by the clamping voltage of the voltage clamping device.

### SUMMARY

The present invention provides a protection apparatus, an electronic device, and a power supply according to the independent claim, so as to reduce a residual voltage at two ends of the protection apparatus, and improve a protection capability from a negative electrode of a power supply port to a positive electrode of the power supply port.

According to a first aspect, a protection apparatus is provided, where the protection apparatus includes: a one-way TVS, where a negative electrode of the one-way TVS is connected to a positive electrode of a power supply, and a positive electrode of the one-way TVS is connected to a negative electrode of the power supply; and a switching type protector, where: the switching type protector is connected between the one-way TVS and the positive electrode of the power supply or between the one-way TVS and the negative electrode of the power supply; when a power supply port is affected by a surge from the positive electrode to the negative electrode, the switching type protector and the one-way TVS are conducted, so as to shunt a surge current; the one-way TVS clamps a surge voltage at two ends of the one-way TVS to a clamping voltage; and when the power supply port is affected by a surge from the negative electrode to the positive electrode, the switching type protector and the one-way TVS are conducted, so as to shunt the surge current.

According to the invention, the protection apparatus further includes a first clamping type protector, so as to shunt the surge current, where the first clamping type protector is connected to the one-way TVS in parallel.

According to the invention, the protection apparatus further includes a first clamping type protector, where the first clamping type protector is connected to the switching type protector and a clamping type protector in parallel, so as to shunt the surge current, where the switching type protector is connected to the clamping type protector in series.

The first clamping type protector is a metal oxide varistor MOV.

According to the invention, the protection apparatus further includes a decoupler, where the decoupler is connected between the power supply port and the protected device in series.

According to the invention, the protection apparatus further includes a second clamping type protector, where the second clamping type protector is connected to the protected device in parallel, the second clamping type protector and the protected device that are connected in parallel are connected to the decoupler in series, a branch circuit in which the decoupler and the second clamping type protector are located is connected in parallel to a branch circuit in which the switching type protector and the one-way TVS are located.

With reference to the first aspect, in a possible implementation manner, the switching type protector is a transient suppression thyristor TSS or a gas discharge tube GDT.

In another possible implementation manner, the protection apparatus further includes an over-current protector, where the over-current protector is connected to the switching type protector and the one-way TVS in series for over-current protection.

According to a second aspect, an electronic device is provided, where the electronic device includes the protection apparatus according the first aspect and a protected apparatus, where the protection apparatus is connected to the protected apparatus in parallel.

According to a third aspect, a power supply is provided, where the power supply includes the protection apparatus according the first aspect and a power supply apparatus, where the protection apparatus is connected to the power supply apparatus in parallel.

Based on the foregoing technical solutions, according to the protection apparatus in the embodiments of the present invention, the switching type protector with a relatively low residual voltage is connected to the one-way TVS in series between power supply ports, so that the residual voltage at the two ends of the protection apparatus can be reduced. Further, shunt of a next-stage circuit can be significantly reduced, and a protection capability from a negative electrode of the power supply port to a positive electrode of the power supply port can be improved.

### BRIEF DESCRIPTION OF DRAWINGS

To describe the technical solutions in the embodiments of the present invention more clearly, the following briefly describes the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a schematic block diagram of a protection apparatus according to an example useful for understanding the present invention;
FIG. 2 is a schematic circuit diagram of a protection apparatus according to an example useful for understanding the present invention;
FIG. 3 is a schematic block diagram of a protection apparatus according to example useful for understanding of the present invention;
FIG. 4 is a schematic block diagram of a protection apparatus according to an example useful for understanding the present invention;
FIG. 5 is a schematic circuit diagram of a protection apparatus according to another example useful for understanding the present invention;
FIG. 6 is a schematic circuit diagram of a protection apparatus according to an example useful for understanding the present invention;
FIG. 7 is a schematic circuit diagram of a protection apparatus according to an example useful for understanding the present invention;
FIG. 8 is a schematic circuit diagram of a protection apparatus according to an example useful for understanding the present invention;
FIG. 9 is a schematic block diagram of a protection apparatus according to yet another example useful for understanding the present invention;
FIG. 10 is a schematic circuit diagram of a protection apparatus according to an example useful for understanding the present invention;
FIG. 11 is a schematic circuit diagram of a protection apparatus according to yet another example useful for understanding the embodiment of the present invention:
FIG. 12 is a schematic block diagram of a protection apparatus according to an embodiment of the present invention;
FIG. 13 is a schematic circuit diagram of a protection apparatus according to an example useful for understanding the present invention; and
FIG. 14 is a schematic circuit diagram of a protection apparatus according to another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are a part rather than all of the embodiments of the present invention. The protection scope of the present invention is defined by the appended claims.

It should be noted that in the following description, when two elements are connected, the two elements may be directly connected, or may be indirectly connected by using one or more intermediate elements or media. A manner in which two elements are connected may include a contact mode or a non-contact mode, or may include a wired mode or a wireless mode. A person skilled in the art may perform equivalent replacement or modification on an exemplary connection in the following description, and the replacement or modification shall fall within the scope of the present invention.

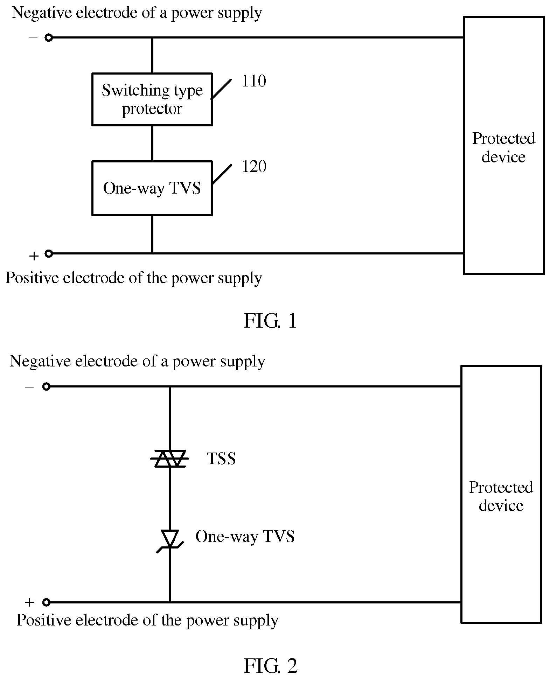

FIG. 1 is a schematic block diagram of a protection apparatus 100 according to an example useful for understanding the present invention. As shown in FIG. 1, the protection apparatus 100 includes: a switching type protector 110 and a one-way transient voltage suppressor (Transient Voltage suppressor, TVS) 120. The TVS may also be referred to as a transient suppression diode.

A negative electrode of the one-way TVS 120 is connected to a positive electrode of a power supply, and a positive electrode of the one-way TVS 120 is connected to a negative electrode of the power supply. The switching type protector 110 is connected between the one-way TVS 120 and the positive electrode of the power supply or between the one-way TVS 120 and the negative electrode of the power supply, that is, the switching type protector 110 is connected to the one-way TVS in series between power supply ports.

Specifically, a first end of the switching type protector 110 is connected to the negative electrode of the power supply, a second end of the switching type protector 110 is connected to the positive electrode of the one-way TVS 120, and the negative electrode of the one-way TVS 120 is connected to the positive electrode of the power supply. Alternatively, positions of the switching type protector 110 and the one-way TVS 120 are interchangeable. A second end of the switching type protector 110 is connected to the positive electrode of the power supply, a first end of the switching type protector 110 is connected to the positive electrode of the one-way TVS 120, and the negative electrode of the one-way TVS 120 is connected to the positive electrode of the power supply.

The power supply is configured to provide a protected device with an operating voltage. The positive and negative electrodes of the power supply are connected to positive and negative electrodes of a power supply input end of the protected device by using the protection apparatus 100. It should be noted that the protection apparatus 100 needs to be connected to the protected device in parallel.

When a power supply port is affected by a surge from the positive electrode to the negative electrode, the switching type protector 110 and the one-way TVS 120 are conducted, so as to shunt a surge current; and the one-way TVS 120 clamps a voltage to a clamping voltage. Therefore, the protected device can be prevented from an overvoltage. When the power supply port is affected by a surge from the negative electrode to the positive electrode, the switching type protector 110 and the one-way TVS 120 are conducted, so as to shunt the surge current. Therefore, the surge current can be prevented from flowing into the protected device.

It should be noted that according to the protection apparatus in this example, the switching type protector 110 with a relatively low residual voltage is connected to the one-way TVS in series, so that a residual voltage at two ends of the protection apparatus can be reduced, that is, a voltage applied to two ends of a next-stage circuit can be reduced. When next-stage circuits (for example, the protected device shown in FIG. 1) including electrolytic capacitors are the same, a lower residual voltage at the two ends of the protection apparatus 100 indicates that a lower current flows into the protected device. Therefore, the protection apparatus in this embodiment of the present invention can reduce the voltage applied to the two ends of the next-stage circuit, so that a protection capability from the negative electrode of the power supply port to the positive electrode of the power supply port can be improved.

When a voltage at two ends of the switching type protector is greater than or equal to an actuating voltage of the switching type protector, the switching type protector may quickly transit from an original high-impedance state to a conductive state, and basically presents a short-circuit state after conduction, so as to discharge a current to protect the next-stage circuit. When a specific short circuit condition is not met, the switching type protector restores to the high-impedance state. In addition, the switching type device features freewheeling, and does not automatically restore from a low-impedance state to a high-impedance state when a freewheeling condition is met. When a specific time expires, the switching type device will be burnt, or even a circuit board is short-circuited or burnt. In addition, the switching type protector generally has a relatively low freewheeling maintenance voltage in the conductive state. For example, it is difficult to implement current turn-off when the switching type protector is applied in a power supply circuit higher than a voltage threshold, and a device is easily damaged because of continuous overheat. When a voltage at two ends of the TVS is not higher than a cutoff voltage of the TVS, the TVS presents a high-impedance state, that is, the TVS basically presents an open circuit state in a circuit. When the voltage at the two ends of the TVS is greater than or equal to an actuating voltage of the TVS, the TVS presents a low-impedance state, and the voltage at the two ends is clamped to a specific level, so that a circuit connected to the TVS in parallel is protected against an extremely high overvoltage surge. In this example, the switching type protector 110 is connected to the one-way TVS 120 in series. After surge impact occurs, a specific residual voltage exists at two ends of the one-way TVS 120, and can play a voltage division role, so that the voltage at the two ends of the switching type protector 110 does not meet a freewheeling maintenance condition, thereby implementing current turn-off of the switching type protector 110. Therefore, the switching type protector 110 restores to the high-impedance state.

Therefore, according to the protection apparatus in this example, a switching type protector with a relatively low residual voltage is connected to a one-way TVS in series between power supply ports, so that a residual voltage at two ends of the protection apparatus can be reduced. Further, shunt of a next-stage circuit can be significantly reduced, and a protection capability from a negative electrode of the power supply port to a positive electrode of the power supply port can be improved.

In the prior art, an MOV is generally connected between the power supply ports to discharge a lightning current. Because of a relatively high residual voltage of the MVO, a decoupling element or a circuit generally needs to be added behind the MOV to reduce a voltage applied to two ends of a next-stage circuit (for example, the protected device shown in FIG. 1), so as to reduce impact imposed on the next-stage circuit by an overvoltage. A volume of the decoupling element or the circuit is relatively large, and therefore an entire volume of the protection apparatus is relatively large in the prior art. However, in the protection apparatus in this example, a residual voltage at two ends of the switching type protector and the one-way TVS is relatively low, so that the volume of the protection apparatus can be reduced without using the decoupling element or the circuit.

In addition, in this example, the residual voltage at the two ends of the protection apparatus can be reduced, and a surge impact tolerance capability can be improved, so that a long wave lightning protection capability can be further improved.

It should be understood that in this example, the switching type protector 110 may be a combination of switching type protection devices or a circuit with a function of a switching type protection device. For example, the switching type protection device may be a gas discharge tube (Gas Discharge Tube, GDT) or a thyristor surge suppressor (Thyristor Surge Suppressor, TSS), and may be referred to as a transient suppression thyristor. The one-way TVS 120 may also be a combination of devices with similar functions of the one-way TVS or a circuit with similar functions of the one-way TVS.

It should be noted that if the one-way TVS is replaced with a one-way type device, for example, a diode, a cathode of the diode is connected to the positive electrode of the power supply, and an anode of the diode is connected to the negative electrode of the power supply by using the switching type protector 110. When the power supply port encounters a surge current from the negative electrode to the positive electrode, the switching type protector 110 and the diode are conducted for shunting to discharge the surge current, so that the surge current can be prevented from flowing into the protected device. However, when the power supply port is affected by a surge from the positive electrode to the negative electrode, because of reverse cutoff of the diode, the surge current cannot pass through a branch circuit in which the switching type protector 110 and the diode are located for discharging, and can only flow into a next protection circuit. When there is only a single-stage protection circuit, the surge current may directly flow into the protected device. Consequently, a protection objective cannot be achieved, and the protected device is damaged.

FIG. 2 is a schematic circuit diagram of a protection apparatus 100 according to an example useful for understanding the present invention. FIG. 2 is a specific example of FIG. 1. A TSS is an example of the switching type protector 110 in FIG. 1. The TSS is connected to the one-way TVS in series, a negative electrode of the one-way TVS is directly connected to a positive electrode of the power supply, and a positive electrode of the one-way TVS is connected to a negative electrode of the power supply by using the TSS. Positions of the one-way TVS and the TSS are interchangeable, provided that it is ensured that the negative electrode of the TVS is connected to the positive electrode of the power supply. For example, the negative electrode of the one-way TVS can be connected to the positive electrode of the power supply by using the TSS, and the positive electrode of the one-way TVS is directly connected to the negative electrode of the power supply. When a power supply port is affected by a surge from the positive electrode to the negative electrode, the TSS and the one-way TVS that are connected in series play a protection role. The one-way TVS performs reverse breakdown, presents a clamping feature, and clamps a voltage to a relatively low voltage value. The TSS basically presents a short-circuit state after conduction. In this case, a residual voltage applied to the protected device is equal to a sum of a voltage at two ends of the TSS and a residual voltage of the one-way TVS. When the power supply port encounters a surge current from the negative electrode to the positive electrode, and an actuating voltage is reached, the one-way TVS is forward conducted, and the TSS is conducted. In this case, the residual voltage applied to the protected device is equal to a sum of the voltage at the two ends of the TSS and a forward conduction voltage of the one-way TVS, and the residual voltage is extremely low, so that a current flowing into a next-stage circuit (that is, the protected device shown in FIG. 2) is lower, and the protected device is prevented from being damaged. Therefore, a protection capability from the negative electrode of the power supply port to the positive electrode of the power supply port is improved.

In addition, in this example useful for understanding the present invention, the TSS is connected to the one-way TVS in series, so that a branch circuit in which the TSS and the one-way TVS are located is in an open-circuit state before an actuating voltage of the TSS is reached. Therefore, a loss generated because of errors of connecting the positive and negative electrodes of the one-way TVS to the positive and negative electrodes of the power supply can be avoided.

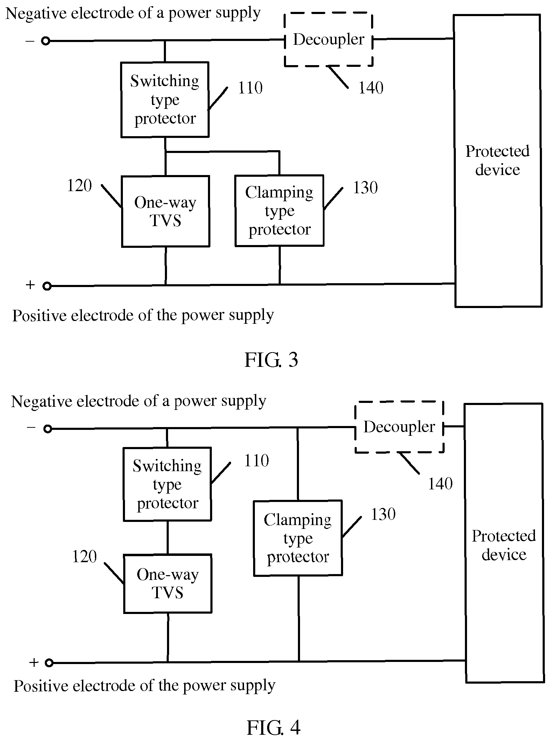

FIG. 3 shows a schematic block diagram of a protection apparatus according to another example useful for understanding the present invention. As shown in FIG. 3, the protection apparatus 100 may further include a clamping type protector 130. The clamping type protector 130 is connected to the one-way TVS 120 in parallel, so as to shunt a surge current flowing through the switching type protector 110 with the first clamper. According to an example useful for understanding the invention shown in FIG. 4, the clamping type protector 130 may be further connected to a branch circuit in parallel, where the branch circuit is formed by the switching type protector 110 and the one-way TVS 120 that are connected in series, so as to shunt, with the branch circuit formed by the switching type protector 110 and the one-way TVS 120 that are connected in series, the surge current encountered by the power supply port. It should be understood that the first clamping type protector can clamp a voltage at two ends of the first clamping type protector to a clamping voltage when shunting a current, so as to prevent an overvoltage of a protected device in a next-stage circuit. The clamping type protector 130 may be an MOV, a TVS, a combination of clamping type protectors, or a circuit with a function of a clamping protector. In this example, reliability and a protection capability of the protection apparatus can be improved.

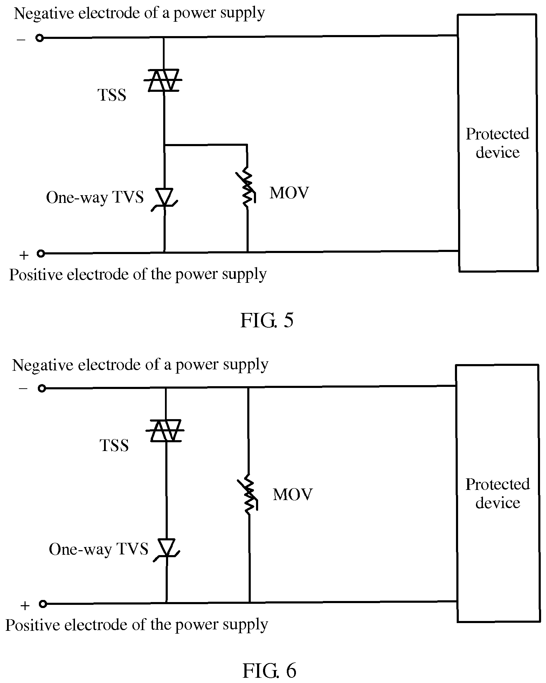

FIG. 5 shows a schematic circuit diagram of a protection apparatus according to another example useful for understanding the present invention. FIG. 5 is an example of FIG. 3, and FIG. 6 is an example of FIG. 4. A TSS in FIG. 5 is an example of the switching type protector 110 in FIG. 3, and a TSS in FIG. 6 is an example of the switching type protector 110 in FIG. 4; an MOV in FIG. 5 is an example of the clamping type protector 130 in FIG. 3, and an MOV in FIG. 6 is an example of the clamping type protector 130 in FIG. 4. In FIG. 5, the one-way TVS is connected to the MOV in parallel, a branch circuit to which the one-way TVS and the MOV are connected in parallel is connected to the TSS in series, a negative electrode of the one-way TVS is directly connected to a positive electrode of the power supply, and a positive electrode of the one-way TVS is connected to a negative electrode of the power supply by using the TSS. In FIG. 6, the one-way TVS is connected to the TSS in series, a negative electrode of the one-way TVS is directly connected to a positive electrode of the power supply, a positive electrode of the one-way TVS is connected to a negative electrode of the power supply by using the TSS, and a branch circuit in which the one-way TVS and the TSS are located is connected to the MOV in parallel. Operating principles in FIG. 5 and FIG. 6 are the same as operating principles in FIG. 3 and FIG. 4. To avoid repetition, details are not described herein again.

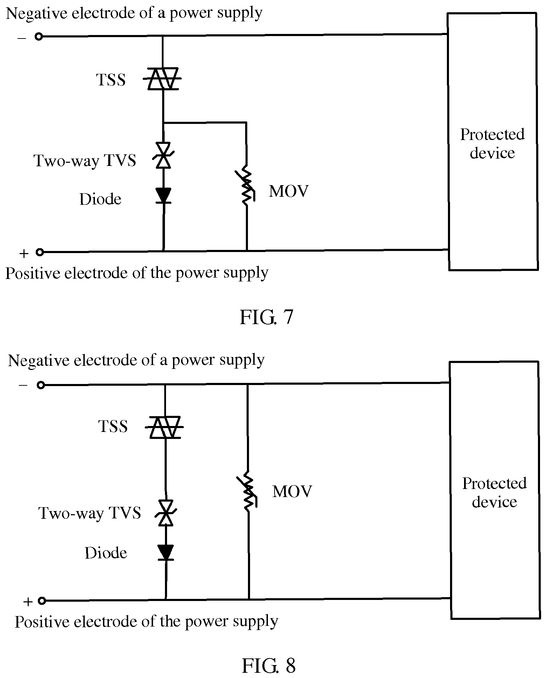

FIG. 7 shows a schematic circuit diagram of a protection apparatus according to another example useful for understanding the present invention. A difference between the protection apparatuses shown in FIG. 7 and FIG. 8 and the protection apparatuses shown in FIG. 5 and FIG. 6 lies in that a one-way TVS is replaced with a two-way TVS and a diode that are connected in series. The TSS, the two-way TVS, and the diode are connected in series; a cathode of the diode is connected to a positive electrode of the power supply; and an anode of the diode is connected to a negative electrode of the power supply by using the two-way TVS and the TSS. When a power supply port is not affected by a surge, because of a switching feature of the TSS and a reverse cutoff feature of the diode, the branch circuit is in an open circuit state. When the power supply port encounters a surge current from the positive electrode to the negative electrode, a branch circuit in which the diode is located is not conducted because of reverse cutoff of the diode. In this case, the MOV and the TSS in FIG. 7 play a protection role, and the MOV in FIG. 8 plays a protection role. When the power supply port encounters a surge current from the negative electrode to the positive electrode, the diode is forward conducted. In this case, the two-way TVS clamps a surge voltage at two ends of the two-way TVS to a clamping voltage. In addition, the diode, the two-way TVS, and the MOV that is connected to the diode and the two-way TVS in parallel in FIG. 7 shunt a surge current flowing through the TSS. In FIG. 8, a branch circuit in which the MOV is located and a branch circuit in which the TSS, the two-way TVS, and the diode are located jointly shunt the surge current of the power supply port, where the TSS, the two-way TVS, and the diode are connected in series, so that a relatively small portion of the surge current can flow through the protected device.

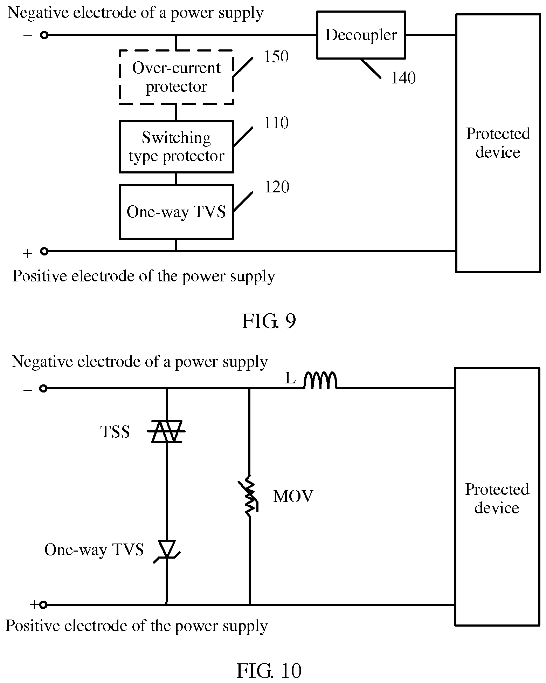

FIG. 9 is a schematic block diagram of a protection apparatus according to another example useful for understanding the present invention. As shown in FIG. 9, the protection apparatus 100 may further include a decoupler 140. The decoupler 140 is connected between the power supply port and the protected device in series. For example, the decoupler 140 shown in FIG. 9 may be connected between the negative electrode of the power supply and the protected device in series, or the decoupler 140 may be connected between the positive electrode of the power supply and the protected device in series. The decoupler 140 is configured to divide a voltage of the power supply port to prevent an overvoltage of the protected device. When the power supply port is affected by a surge, a surge current first flows through the decoupler 140 and the protected device that are connected in series. As a current intensity increases, a voltage at two ends of the decoupler and the protected device increases, and when the voltage reaches an actuating voltage of the switching type protector 110 and the one-way TVS 120, the switching type protector 110 and the one-way TVS 120 are actuated and conducted. In this case, most of current flows through a branch circuit in which the switching type protector 110 and the one-way TVS 120 are located, only a small portion of the current flows through the decoupler and the protected device that are connected in series, so as to prevent most of the current from flowing through the protected device. The decoupler divides a voltage between the switching type protector 110 and the one-way TVS 120, so as to avoid a case in which an overvoltage is caused because an actuating voltage on the branch circuit in which the switching type protector 110 and the one-way TVS 120 are located is entirely applied to the two ends of the protected device. It should be understood that multiple decouplers may be disposed on the protection apparatus 100. For example, a decoupler is connected in series between the positive electrode of the power supply and the protected device or between the negative electrode of the power supply and the protected device. The decoupler may be formed by one or more parts or components with a decoupling function, such as an inductor, a resistor, a MOS transistor, a conducting wire, or a cable.

It should be noted that the decoupler 140 shown in dashed boxes in FIG. 3 and FIG. 4 plays a same role as the decoupler 140 shown in FIG. 6, and details are not described herein again.

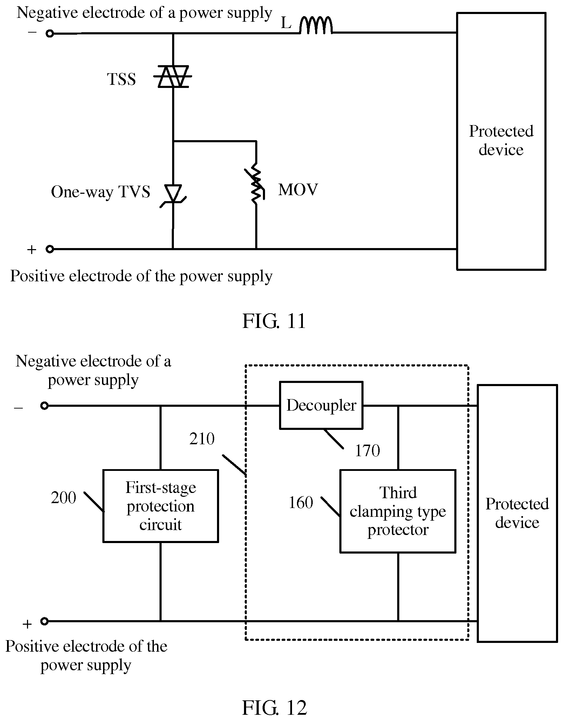

FIG. 11 shows a schematic circuit diagram of a protection apparatus according to another example useful for understanding the present invention. FIG. 11 is another example of FIG. 3, and FIG. 10 is another example of FIG. 4. A TSS in FIG. 10 is an example of the switching type protector 110 in FIG. 4, and a TSS in FIG. 11 is an example of the switching type protector 110 in FIG. 3; an MOV in FIG. 10 is an example of the clamping type protector 130 in FIG. 4, and an MOV in FIG. 11 is an example of the clamping type protector 130 in FIG. 3; an L in FIG. 10 is an example of the decoupler 140 in FIG. 4, and an L in FIG. 11 is an example of the decoupler 140 in FIG. 3. Operating principles in FIG. 10 and FIG. 11 are the same as operating principles in FIG. 3 and FIG. 4. To avoid repetition, details are not described herein again.

Optionally, the protection apparatus 100 may further include an over-current protector 150, as shown in a dashed box in FIG. 9. The over-current protector 150 is connected to the switching type protector 110 and the one-way TVS 120 in series for over-current protection. In this way, a power failure can be avoided. For example, when the switching type protector 110 or the one-way TVS 120 on a branch circuit in which the over-current protector 150 is located fails, the over-current protector 150 may be quickly disconnected, so as to ensure that a protected device properly runs. A position of the over-current protector 150 is interchangeable with a position of the switching type protector 110 or a position of the one-way TVS 120, provided that it is ensured that the over-current protector 150 is connected to the switching type protector 110 and the one-way TVS 120 in series. The over-current protector 150 may be an element or a circuit with an over-current protection function, such as a fuse or a thermistor.

It should be understood that an over-current protector may be further added to the branch circuit in which the switching type protector 110 and the one-way TVS 120 in the protection apparatus are located according to the embodiments of the present invention shown in FIG. 1 to FIG. 8, FIG. 10, and FIG. 11, so that the switching type protector 110, the one-way TVS 120, and the over-current protector are connected in series.

FIG. 12 is a schematic block diagram of a protection apparatus 100 according to an embodiment of the present invention. As shown in FIG. 12, the protection apparatus 100 includes a first-stage protection circuit 200 and a second-stage protection circuit 210. The second-stage protection circuit 210 is connected to the first-stage protection circuit in parallel. The first-stage protection circuit 200 includes a protection apparatus 100 according to the examples useful for understanding the present invention shown in FIG.3, 5 and 7, and the second-stage protection circuit 210 includes a third clamping type protector 160 and a decoupler 170. The third clamping type protector 160 is connected to a protected device in parallel, and the decoupler 170 is connected to the third clamping type protector 160 and the protected device in series, where the third clamping type protector 160 is connected to the protected device in parallel. The decoupler 170 can divide a voltage at two ends of the second-stage protection circuit. The third clamping type protector 160 is connected to the protected device in parallel, so as to shunt a surge voltage or a surge current. The third clamping type protector 160 may be an overvoltage protection element such as an MOV or a TVS, or a combinational circuit of overvoltage protection elements. When a power supply port encounters a surge current, the second-stage protection circuit 210 is first actuated. The surge current first flows through the second-stage protection circuit 210. When a voltage at two ends of the second-stage protection circuit reaches an actuating voltage of the first-stage protection circuit 200, most of current in the surge current flows through the first-stage protection circuit 200, and in this case, a small portion of the current in the surge current flows through the second-stage protection circuit 210, so that a residual voltage of the second-stage protection circuit 210 is relatively low, thereby ensuring that the protected device such as an electronic device can properly run or cannot be damaged.

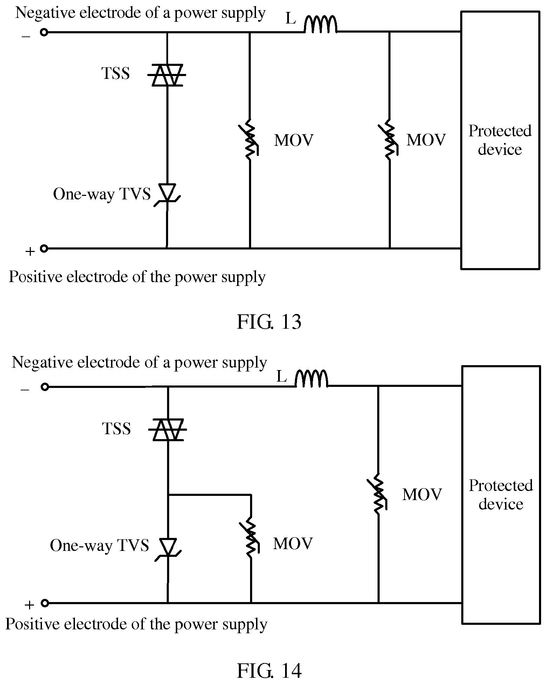

FIG. 14 shows a schematic circuit diagram of a protection apparatus according to another embodiment of the present invention. FIG. 13 and FIG. 14 are examples of FIG. 12. A branch circuit in which the TSS and the one-way TVS are located and a branch circuit in which an MOV on a left side of L is located in FIG. 13 constitute an example of the first-stage protection circuit 200 in FIG. 12. The TSS is connected to the one-way TVS in series between power supply ports, and a cathode of the one-way TVS is connected to a positive electrode of the power supply. The MOV on the left side of L is connected to the TSS and the one-way TVS in parallel, where the TSS and the one-way TVS are connected in series. A branch circuit in which L is located and a branch circuit in which an MOV on a right side of L is located constitute an example of the second-stage protection circuit 210 in FIG. 12. The MOV on the right side of L is connected to a protected device in parallel, and L is connected to the MOV and the protected device in series, where the MOV and the protected device are connected in series.

In FIG. 13, when a power supply port is affected by a surge from the positive electrode to the negative electrode, a current first flows through L and the MOV on the right side of L. When a voltage at two ends of L and the MOV on the right side of L reaches an actuating voltage of the TSS and the one-way TVS that are connected in series or an actuating voltage of the MOV on the left side of L, most of current in a surge current flows through the branch circuit in which the TSS and the one-way TVS that are connected in series are located and the branch circuit in which the MOV on the left side of L is located. In addition, the one-way TVS clamps a voltage at two ends of the one-way TVS to a clamping voltage, and the MOV on the left side of L clamps a voltage at two ends of the MOV to a clamping voltage. In this case, a small portion of the current in the surge current flows through L and the MOV on the right side of L, so that a residual voltage at the two ends of the MOV on the right side of L is relatively low, thereby ensuring that the protected device such as an electronic device can properly run or cannot be damaged. When the power supply port is affected by a surge from the negative electrode to the positive electrode, an operating principle of the protection apparatus is similar, and a difference lies in that the one-way TVS presents a diode feature in this case, and is forward conducted. In this case, the branch circuit in which the one-way TVS and the TSS are located is used to shunt the surge current, and cannot clamp a voltage.

A difference between FIG. 13 and FIG. 14 lies in that an MOV on a left side of L is connected to a one-way TVS in parallel, and a TSS is connected to the one-way TVS and the MOV in series, where the one-way TVS is connected to the MOV in parallel. An operating principle of the protection apparatus in FIG. 14 is similar to that of the protection apparatus in FIG. 13. When a voltage at two ends of L and of the MOV on the right side of L reaches an actuating voltage on a branch circuit in which the TSS, the one-way TVS, and the MOV on the left side of L are located, most of current in a surge current flows through the branch circuit. A difference lies in that when the surge current flows from a positive electrode of a power supply to a negative electrode of the power supply, the one-way TVS and the MOV on the left side of L jointly clamp the voltage at two ends to a clamping voltage; and when the surge voltage flows from the negative electrode of the power supply to the positive electrode of the power supply, the one-way TVS presents a conduction feature of a diode, and the MOV on the left side of L clamps the voltage at the two ends to a clamping voltage.

It should be understood that the protection apparatus provided in this embodiment of the present invention may further be a multi-stage protection apparatus including a multi-stage protection circuit. For example, when a withstand capability of the protected device is relatively low, a third-stage protection circuit or a fourth-stage protection circuit may be further disposed to gradually discharge a surge current encountered by a power supply port, so that the protected device can properly run.

Another embodiment of the present invention further provides an electronic device. The electronic device includes the protection apparatus according to the foregoing embodiments and a protected apparatus, and the protection apparatus is connected to the protected apparatus in parallel.

Another embodiment of the present invention further provides a power supply. The power supply includes the protection apparatus according to the foregoing embodiments and a power supply apparatus, and the protection apparatus is connected to the power supply apparatus in parallel.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, going beyond the scope of the present invention as defined in the appended claims.

It may be clearly understood by a person skilled in the art that, for the purpose of convenient and brief description, for a detailed working process of the foregoing system, apparatus, and unit, reference may be made to a corresponding process in the foregoing method embodiments, and details are not described.

In the several embodiments provided in this application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A protection apparatus, comprising:
a one-way transient voltage suppressor TVS (120), wherein a negative electrode of the one-way TVS is to be connected to a positive electrode of a power supply, and a positive electrode of the one-way TVS is to be connected to a negative electrode of the power supply; and
a switching type protector (110), wherein the switching type protector is arranged such that, in use, it is connected between the one-way TVS and the positive electrode of the power supply or between the one-way TVS and the negative electrode of the power supply, wherein
when a power supply port is affected by a surge from the positive electrode to the negative electrode, the switching type protector (110) and the one-way TVS (120) are conducted, so as to shunt a surge current, and the one-way TVS clamps a surge voltage at two ends of the one-way TVS to a clamping voltage, and
when the power supply port is affected by a surge from the negative electrode to the positive electrode, the switching type protector (110) and the one-way TVS (120) are conducted, so as to shunt the surge current;
the protection apparatus further comprising:
a decoupler (170), wherein the decoupler (170) is arranged such that, in use, it is connected between the power supply port and a protected device in series, and
a second clamping type protector (160), wherein the second clamping type protector (160) is arranged such that, in use, it is connected to the protected device in parallel, wherein the decoupler (170) is connected to the second clamping type protector (160) and, in use, to the protected device in series, a branch circuit in which the decoupler (170) and the second clamping type protector (160) are located is connected in parallel to a branch circuit in which the switching type protector (110) and the one-way TVS (120) are located;
a first clamping type protector (130), wherein the switching type protector (110) is connected to the first clamping type protector (130) and the one-way TVS (120) in series, and the first clamping type protector (130) is connected to the one-way TVS (120) in parallel, so as to shunt the surge current,
**characterized in that** the first clamping type protector (130) is a metal oxide varistor

2. The protection apparatus according to claim 1, wherein the switching type protector (110) is a transient suppression thyristor TSS or a gas discharge tube GDT.

3. The protection apparatus according to any one of claims 1 to 2, further comprising an over-current protector (150), wherein the over-current protector (150) is connected to the switching type protector (110) and the one-way TVS (120) in series for over-current protection.

4. An electronic device, comprising the protection apparatus according to any one of claims 1 to 3 and a protected device, wherein the protection apparatus is connected to the protected device in parallel.

5. A power supply, comprising the protection apparatus according to any one of claims 1 to 3 and a power supply apparatus, wherein the protection apparatus is connected to the power supply apparatus in parallel.

## Patentansprüche

1. Schutz-Vorrichtung, umfassend:
einen unidirektionalen Transientenspannungsunterdrücker TVS (120), wobei eine negative Elektrode des unidirektionalen TVS mit einer positiven Elektrode einer Stromversorgung zu verbinden ist und eine positive Elektrode des unidirektionalen TVS mit einer negativen Elektrode der Stromversorgung zu verbinden ist; und
eine Schutzvorrichtung (110) des Schalttyps, wobei die Schutzvorrichtung des Schalttyps so ausgelegt ist, dass sie im Gebrauch zwischen den unidirektionalen TVS und die positive Elektrode der Stromversorgung oder zwischen den unidirektionalen TVS und die negative Elektrode der Stromversorgung geschaltet ist, wobei,
wenn ein Stromversorgungsport von einer Spitze von der positiven Elektrode zur negativen Elektrode betroffen ist, die Schutzvorrichtung (110) des Schalttyps und der unidirektionale TVS (120) leitend sind, um so einen Spitzenstrom abzuleiten, und der unidirektionale TVS eine Spitzenspannung an zwei Enden des unidirektionalen TVS auf eine Klemmspannung klemmt, und
wenn der Stromversorgungsport von einer Spitze von der negativen Elektrode zur positiven Elektrode betroffen ist, die Schutzvorrichtung (110) des Schalttyps und der unidirektionale TVS (120) leitend sind, um so den Spitzenstrom abzuleiten;
wobei die Schutz-Vorrichtung ferner Folgendes umfasst:
einen Entkoppler (170), wobei der Entkoppler (170) so ausgelegt ist, dass er im Gebrauch zwischen dem Stromversorgungsport und einer geschützten Vorrichtung in Reihe geschaltet ist, und
eine zweite Schutzvorrichtung (160) des Klemmtyps, wobei die zweite Schutzvorrichtung (160) des Klemmtyps so ausgelegt ist, dass sie im Gebrauch mit der geschützten Vorrichtung parallel geschaltet ist, wobei der Entkoppler (170) mit der zweiten Schutzvorrichtung (160) des Klemmtyps verbunden und im Gebrauch mit der geschützten Vorrichtung in Reihe geschaltet ist, eine Zweigschaltung, in der der Entkoppler (170) und die zweite Schutzvorrichtung (160) des Klemmtyps sich befinden, mit einer Zweigschaltung, in der sich die Schutzvorrichtung (110) des Schalttyps und der unidirektionale TVS (120) befinden, parallel geschaltet ist;
eine erste Schutzvorrichtung (130) des Klemmtyps, wobei die Schutzvorrichtung (110) des Schalttyps mit der ersten Schutzvorrichtung (130) des Klemmtyps und dem unidirektionalen TVS (120) in Reihe geschaltet ist und die erste Schutzvorrichtung (130) des Klemmtyps mit dem unidirektionalen TVS (120) parallel geschaltet ist, um so den Spitzenstrom abzuleiten,
**dadurch gekennzeichnet, dass** die erste Schutzvorrichtung (130) des Klemmtyps ein Metalloxid-Varistor MOV ist.

2. Schutz-Vorrichtung nach Anspruch 1, wobei die Schutzvorrichtung (110) des Schalttyps ein Transientenunterdrückungsthyristor TSS oder eine Gasentladungsröhre GDT ist.

3. Schutz-Vorrichtung nach einem der Ansprüche 1 bis 2, die ferner eine Überstrom-Schutzvorrichtung (150) umfasst, wobei die Überstrom-Schutzvorrichtung (150) zum Überstromschutz mit der Schutzvorrichtung (110) des Schalttyps und dem unidirektionalen TVS (120) in Reihe geschaltet ist.

4. Elektronische Vorrichtung, die die Schutz-Vorrichtung nach einem der Ansprüche 1 bis 3 und eine geschützte Vorrichtung umfasst, wobei die Schutz-Vorrichtung mit der geschützten Vorrichtung parallelgeschaltet ist.

5. Stromversorgung, die die Schutz-Vorrichtung nach einem der Ansprüche 1 bis 3 und eine Stromversorgungsvorrichtung umfasst, wobei die Schutz-Vorrichtung mit der Stromversorgungsvorrichtung parallel geschaltet ist.

## Revendications

1. Appareil de protection comprenant :
un suppresseur de tension transitoire TVS unidirectionnel (120), dans lequel une électrode négative du TVS unidirectionnel est destinée à être connectée à une électrode positive d'une alimentation électrique et une électrode positive du TVS unidirectionnel est destinée à être connectée à une électrode négative de l'alimentation électrique ; et
un protecteur du type commutation (110), le protecteur du type commutation étant agencé de telle sorte que, en cours d'utilisation, il soit connecté entre le TVS unidirectionnel et l'électrode positive de l'alimentation électrique ou entre le TVS unidirectionnel et l'électrode négative de l'alimentation électrique, dans lequel lorsqu'un port d'alimentation électrique est affecté par une surtension allant de l'électrode positive à l'électrode négative, le protecteur du type commutation (110) et le TVS unidirectionnel (120) sont commandés, de manière à shunter un courant de surtension, et le TVS unidirectionnel verrouille une tension de surtension à deux extrémités du TVS unidirectionnel à une tension de verrouillage, et
lorsque le port d'alimentation électrique est affecté par une surtension allant de l'électrode négative à l'électrode positive, le protecteur du type commutation (110) et le TVS unidirectionnel (120) sont commandés, de manière à shunter le courant de surtension ;
l'appareil de protection comprenant en outre :
un découpleur (170), le découpleur (170) étant agencé de telle sorte que, en cours d'utilisation, il soit connecté entre le port d'alimentation électrique et un dispositif protégé en série, et
un second protecteur du type verrouillage (160), le second protecteur du type verrouillage (160) étant agencé de telle sorte que, en cours d'utilisation, il soit connecté au dispositif protégé en parallèle, dans lequel le découpleur (170) est connecté au second protecteur du type verrouillage (160) et, en cours d'utilisation, au dispositif protégé en série, un circuit de dérivation dans lequel se trouvent le découpleur (170) et le second protecteur du type verrouillage (160) est connecté en parallèle à un circuit de dérivation dans lequel se trouvent le protecteur du type commutation (110) et le TVS unidirectionnel (120) ;
un premier protecteur du type verrouillage (130), dans lequel le protecteur du type commutation (110) est connecté au premier protecteur du type verrouillage (130) et au TVS unidirectionnel (120) en série, et le premier protecteur du type verrouillage (130) est connecté au TVS unidirectionnel (120) en parallèle, de manière à shunter le courant de surtension,
**caractérisé en ce que** le premier protecteur du type verrouillage (130) est une varistance d'oxyde métallique MOV.

2. Appareil de protection selon la revendication 1, dans lequel le protecteur du type commutation (110) est un thyristor de suppression transitoire TSS ou un tube de décharge de gaz GDT.

3. Appareil de protection selon l'une quelconque des revendications 1 à 2, comprenant en outre un protecteur de surintensité (150), le protecteur de surintensité (150) étant connecté au protecteur du type commutation (110) et au TVS unidirectionnel (120) en série pour une protection contre les surintensités.

4. Dispositif électronique, comprenant l'appareil de protection selon l'une quelconque des revendications 1 à 3 et un dispositif protégé, dans lequel l'appareil de protection est connecté au dispositif protégé en parallèle.

5. Alimentation électrique, comprenant l'appareil de protection selon l'une quelconque des revendications 1 à 3 et un appareil d'alimentation électrique, l'appareil de protection étant connecté à l'appareil d'alimentation électrique en parallèle.
